(19) **Europäisches Patentamt**

**European Patent Office**

**Office européen des brevets**

(11) **EP 1 655 876 A2**

(12) **EUROPEAN PATENT APPLICATION**

(43) Date of publication:
**10.05.2006 Bulletin 2006/19**

(51) Int Cl.:
***H04L 1/06*** (2006.01)

(21) Application number: **05024130.6**

(22) Date of filing: **04.11.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **04.11.2004 KR 2004089484**
**09.03.2005 KR 2005019848**

(71) Applicant: **Samsung Electronics Co., Ltd.**
**Suwon-si, Gyeonggi-Do (KR)**

(72) Inventors:
- **Chae, Chan-Byoung**
  **Seoul (KR)**
- **Yun, Sung-Ryul**
  **Yeongtong-gu**
  **Suwon-si**
  **Gyeonggi-do (KR)**
- **Jeong, Hong-Sil**
  **Seoul (KR)**

- **Roh, Won-Il**
  **Yongin-si**
  **Gyeonggi-do (KR)**
- **Oh, Jeong-Tae**
  **Yongin-si**
  **Gyeonggi-do (KR)**
- **Ko, Kyun-Byoung**
  **Taean-eub**
  **Hwasung-si**
  **Gyeonggi-do (KR)**
- **Jung, Young-Ho**
  **Seoul (KR)**
- **Nam, Seung-Hoon**
  **Yangcheon-gu**
  **Seoul (KR)**
- **Chung, Jae-Hak**
  **Jonro-ku, Seoul 110-062 (KR)**

(74) Representative: **Grünecker, Kinkeldey,**
**Stockmair & Schwanhäusser**
**Anwaltssozietät**
**Maximilianstrasse 58**
**80538 München (DE)**

(54) **Apparatus and method for transmitting and receiving data using space-time block coding**

(57) An space-time-frequency block coding (STFBC) apparatus for a transmitter with four Tx antennas is provided. An input symbol sequence is transmitted through the four Tx antennas in a predetermined method based on feedback information received from a receiver or a selected matrix with regularities, thereby improving the performance of an STFBC.

FIG.5

EP 1 655 876 A2

**Description**

**PRIORITY**

This application claims priority under 35 U.S.C. § 119 to an application entitled "Apparatus And Method For Transmitting And Receiving Data Using Space-Time Block Coding To Increase Performance" filed in the Korean Intellectual Property Office on November 4, 2004 and assigned Serial No. 2004-89484 and "Apparatus And Method For Transmitting And Receiving Data Using Space-Time Block Coding To Increase Performance" filed in the Korean Intellectual Property Office on March 9, 2005 and assigned Serial No. 2005-19848, the contents of which are incorporated herein by reference.

**BACKGROUND OF THE INVENTION**

1. Field of the Invention

The present invention relates generally to a space-time-frequency block coding apparatus in a transmitter with four transmit (Tx) antennas, and in particular, to an apparatus and method for transmitting an input symbol sequence through four Tx antennas using feedback information received from a receiver or using a selected transmission matrix having regularities in order to improve the performance of a space-time-frequency block code (STFBC).

2. Description of the Related Art

The fundamental issue in communications is the efficiency and reliability with which data is transmitted on channels. As future-generation multimedia mobile communications require high-speed communication systems capable of transmitting a variety of information including video and wireless data beyond solely voice information, it is very important to increase system efficiency through the use of a suitable channel coding method.

Generally, in the wireless channel environment of a mobile communication system, unlike that of a wired channel environment, a transmission signal inevitably experiences loss due to several factors such as multipath interference, shadowing, wave attenuation, time-variant noise and fading.

The information loss causes a severe distortion to the transmission signal, degrading the overall system performance. In order to reduce the information loss and increase system reliability, many error control techniques are usually adopted. Typically, the use of an error correction code is employed.

Multipath fading is relieved by diversity techniques in the wireless communication system. The diversity techniques include time diversity, frequency diversity and antenna diversity.

The antenna diversity technique uses multiple antennas. This diversity scheme is further sub-divided into receive (Rx) antenna diversity using a plurality of Rx antennas, Tx antenna diversity using a plurality of Tx antennas, and multiple-input multiple-output (MIMO) using a plurality of Tx antennas and a plurality of Rx antennas.

MIMO is a special case of space-time coding (STC) that extends coding of the time domain to the space domain by transmission of a signal encoded in a predetermined coding method through a plurality of Tx antennas, in order to achieve a lower error rate.

V. Tarokh, et. al. proposed space-time block coding (STBC) for efficiently applying antenna diversity (see "Space-Time Block Coding from Orthogonal Designs", IEEE Trans. On Info., Theory, Vol. 45, pp. 1456-1467, July 1999). The Tarokh STBC scheme is an extension of the transmit antenna diversity scheme of S.M. Alamouti (see, "A Simple Transmit Diversity Technique for Wireless Communications", IEEE Journal on Selected Area in Communications, Vol. 16, pp.1451-1458, October 1988), for two or more Tx antennas.

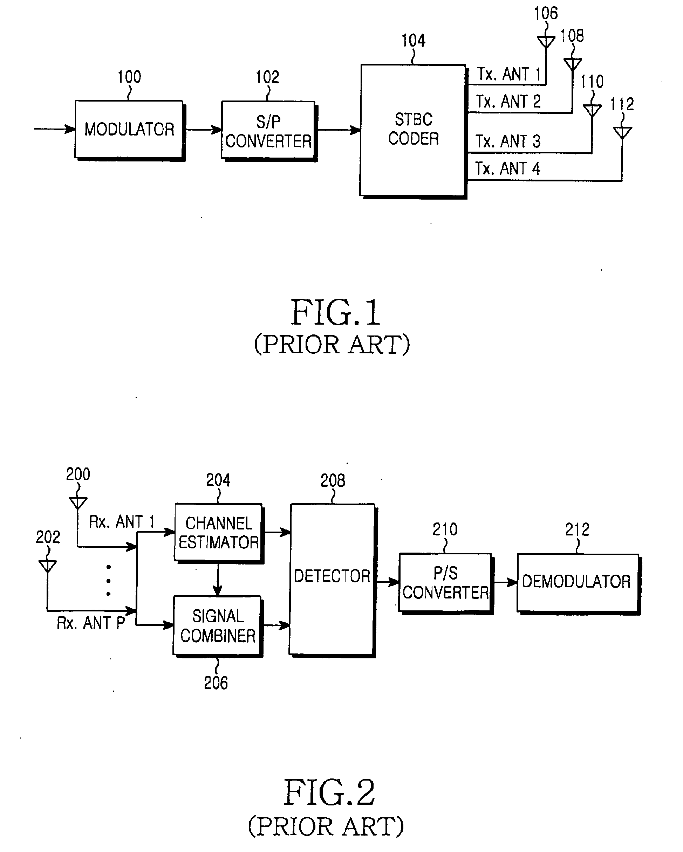

FIG 1 is a block diagram of a transmitter in a mobile communication system using the conventional Tarokh STBC scheme. The transmitter is comprised of a modulator 100, a serial-to-parallel (S/P) converter 102, an STBC coder 104 and four Tx antennas 106, 108, 110 and 112.

Referring to FIG. 1, the modulator 100 modulates input information data (or coded data) in a predetermined modulation scheme. The modulation scheme can be binary phase shift keying (BPSK), quadrature phase shift keying (QPSK), quadrature amplitude modulation (QAM), pulse amplitude modulation (PAM) or phase shift keying (PSK).

The S/P converter 102 converts serial modulation symbols received from the modulator 100, $s_1, s_2, s_3, s_4$ to parallel symbols. The STBC coder 104 creates eight symbol combinations by STBC-encoding the four modulation symbols, $s_1, s_2, s_3, s_4$ and sequentially transmits them through the four Tx antennas 106 to 112. A coding matrix used to generate the eight symbol combinations is expressed as Equation (1):

$$G_4 = \begin{bmatrix} s_1 & s_2 & s_3 & s_4 \\ -s_2 & s_1 & -s_4 & s_3 \\ -s_3 & s_4 & s_1 & -s_2 \\ -s_4 & -s_3 & s_2 & s_1 \\ s_1^* & s_2^* & s_3^* & s_4^* \\ -s_2^* & s_1^* & -s_4^* & s_3^* \\ -s_3^* & s_4^* & s_1^* & -s_2^* \\ -s_4^* & -s_3^* & s_2^* & s_1^* \end{bmatrix}$$

$$\ldots\ldots (1)$$

where $G_4$ denotes the coding matrix for symbols transmitted through the four Tx antennas 106 to 112 and $s_1$, $s_2$, $s_3$, $s_4$ denote the input four symbols to be transmitted. The columns of the coding matrix represent the Tx antennas and the rows represent time required to transmit the four symbols. Thus, the four symbols are transmitted through the four Tx antennas for eight time intervals.

Specifically, for a first time interval, $s_1$ is transmitted through the first Tx antenna 106, $s_2$ through the second Tx antenna 108, $s_3$ through the third Tx antenna 110 and $s_4$ through the fourth Tx antenna 112. In this manner, $-s_4^*$, $-s_3^*$, $s_2^*$, $-s_1^*$ are transmitted through the first to fourth Tx antennas 106 to 112, respectively, for an eighth time interval. That is, the STBC coder 104 sequentially provides the symbols of an $i^{th}$ column in the coding matrix to an $i^{th}$ Tx antenna.

As described above, the STBC coder 104 generates the eight symbol sequences using the input four symbols and their conjugates and negatives and transmits them through the four Tx antennas 106 to 112 for eight time intervals. Since the symbol sequences for the respective Tx antennas are mutually orthogonal, the diversity gain achieved is as high as the diversity order.

FIG. 2 is a block diagram of a receiver in the mobile communication system using the conventional STBC scheme. The receiver is the counterpart of the transmitter illustrated in FIG 1.

The receiver is comprised of a plurality of Rx antennas 200 to 202, a channel estimator 204, a signal combiner 206, a detector 208, a parallel-to-serial (P/S) converter 210 and a demodulator 212.

Referring to FIG. 2, the first to $P^{th}$ Rx antennas 200 to 202 provide signals received from the four Tx antennas of the transmitter illustrated in FIG. 1 to the channel estimator 204 and the signal combiner 206.

The channel estimator 204 estimates channel coefficients representing channel gains from the Tx antennas 106 to 112 to the Rx antennas 200 to 202 using the signals received from the first to $P^{th}$ Rx antennas 200 to 202.

The signal combiner 206 combines the signals received from the 1 to P Rx antennas 200 to 202 with the channel coefficients in a predetermined method.

The detector 208 generates hypothesis symbols by multiplying the combined symbols by the channel coefficients, calculates decision statistics for all possible transmitted symbols from the transmitter using the hypothesis symbols and detects the actual transmitted symbols through threshold detection.

The P/S converter 210 converts the parallel symbols received from the detector 208 to serial symbols. The demodulator 212 demodulates the serial symbol sequence in a predetermined demodulation method, thereby recovering the original information bits.

As stated earlier, the Alamouti STBC technique offers the benefit of achieving as high a diversity order as the number of Tx antennas, namely a full diversity order, without sacrificing data rate by transmitting complex symbols through only two Tx antennas.

Meanwhile, the Tarokh STBC scheme achieves a full diversity order using an STBC in the form of a matrix with orthogonal columns, as described with reference to FIGs. 1 and 2. However, because four complex symbols are transmitted for eight time intervals, the Tarokh STBC scheme causes a half decrease in data rate. In addition, since it takes eight time intervals to completely transmit one block with four complex symbols, reception performance is reduced due to channel changes within the block over a fast fading channel. In other words, the transmission of complex symbols through four or more Tx antennas requires 2N time intervals for N symbols, causing a longer latency and a decrease in data rate.

To achieve a full rate in a MIMO system that transmits a complex signal through three or more Tx antennas, the Giannakis group presented a full-diversity, full-rate (FDFR) STBC for four Tx antennas using constellation rotation over a complex field.

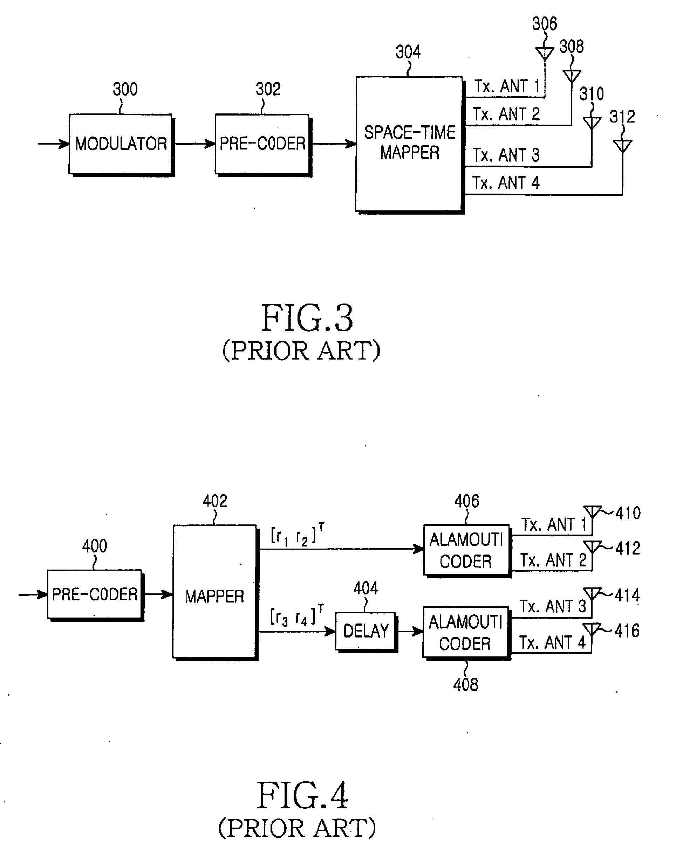

FIG 3 is a block diagram of a transmitter in a mobile communication system using the conventional Giannakis STBC scheme. The transmitter includes a modulator 300, a pre-coder 302, a space-time mapper 304 and a plurality of Tx antennas 306, 308, 310 and 312.

Referring to FIG 3, the modulator 300 modulates input information data (or coded data) in a predetermined modulation scheme such as BPSK, QPSK, QAM, PAM or PSK.

The pre-coder 302 pre-encodes $N_t$ modulation symbols received from the modulator 300, $d_1$, $d_2$, $d_3$, $d_4$ such that signal rotation occurs in a signal space, and outputs the resulting $N_t$ symbols. For notational simplicity, four Tx antennas are assumed. The symbol d denotes a sequence of four modulation symbols from the modulator 300. The pre-coder 302 generates a complex vector r by computing the modulation symbol sequence, d using Equation (2):

$$r = \Theta d = \begin{bmatrix} 1 & \alpha_0^1 & \alpha_0^2 & \alpha_0^3 \\ 1 & \alpha_1^1 & \alpha_1^2 & \alpha_1^3 \\ 1 & \alpha_2^1 & \alpha_2^2 & \alpha_2^3 \\ 1 & \alpha_3^1 & \alpha_3^2 & \alpha_3^3 \end{bmatrix} \begin{bmatrix} d_1 \\ d_2 \\ d_3 \\ d_4 \end{bmatrix} = \begin{bmatrix} r_1 \\ r_2 \\ r_3 \\ r_4 \end{bmatrix} \quad \ldots \ldots (2)$$

where $\Theta$ denotes a pre-coding matrix. The Giannakis group uses a unitary Vandermonde matrix as the pre-coding matrix. In the pre-coding matrix, $\alpha_i$ is given as Equation (3):

$$\alpha_i = exp\left(j2\pi(i + 1/4)/4\right), \quad i = 0, 1, 2, 3 \quad \ldots \ldots (3)$$

The Giannakis STBC scheme uses four Tx antennas and is easily extended to more than four Tx antennas, as well. The space-time mapper 304 STBC-encodes the pre-coded symbols in the following matrix of Equation (4)::

$$S = \begin{bmatrix} r_1 & 0 & 0 & 0 \\ 0 & r_2 & 0 & 0 \\ 0 & 0 & r_3 & 0 \\ 0 & 0 & 0 & r_4 \end{bmatrix} \quad \ldots \ldots (4)$$

where S is a coding matrix for symbols transmitted through the four Tx antennas 306 to 312. The number of columns of the coding matrix is equal to that of the Tx antennas and the number of rows corresponds to the time required to transmit the four symbols. That is, the four symbols are transmitted through the four Tx antennas for the four time intervals.

Specifically, for a first time interval, $r_1$ is transmitted through the first Tx antenna 306. For a second time interval, $r_2$ is transmitted through the second Tx antenna 308. For a third time interval, $r_3$ is transmitted through the third Tx antenna 310. For a fourth time interval, $r_4$ is transmitted through the fourth Tx antenna 312.

Upon receipt of the four symbols on a radio channel for the four time intervals, a receiver (not shown) recovers the modulation symbol sequence, d by maximum likelihood (ML) decoding.

Tae-Jin Jung and Kyung-Whoon Cheun proposed a pre-coder and a concatenated code with an excellent coding gain in 2003, compared to the Giannakis STBC. They enhance the coding gain by concatenating Alamouti STBCs instead of using a diagonal matrix proposed by the Giannakis group. For convenience' sake, their STBC is called "Alamouti FDFR STBC".

The Alamouti FDFR STBC will be described below. FIG. 4 is a block diagram of a transmitter in a mobile communication system using the conventional Alamouti FDFR STBC for four Tx antennas. As illustrated in FIG 4, the transmitter includes a pre-coder 400, a mapper 402, a delay 404, two Alamouti coders 406 and 408 and four Tx antennas 410, 412, 414 and 416.

Referring to FIG. 4, the pre-coder 400 pre-encodes input four modulation symbols, $d_1$, $d_2$, $d_3$, $d_4$ such that signal rotation occurs in a signal space. For the input of a sequence of the four modulation symbols, d, the pre-coder 400 generates a complex vector, r by computing according to Equation (5):

$$r = \Theta d = \begin{bmatrix} 1 & \alpha_0^1 & \alpha_0^2 & \alpha_0^3 \\ 1 & \alpha_1^1 & \alpha_1^2 & \alpha_1^3 \\ 1 & \alpha_2^1 & \alpha_2^2 & \alpha_2^3 \\ 1 & \alpha_3^1 & \alpha_3^2 & \alpha_3^3 \end{bmatrix} \begin{bmatrix} d_1 \\ d_2 \\ d_3 \\ d_4 \end{bmatrix} = \begin{bmatrix} r_1 \\ r_2 \\ r_3 \\ r_4 \end{bmatrix}$$

$$\ldots\ldots(5)$$

where $\alpha_i = exp(j2\pi(i+1/4)/4)$, $i = 0,1,2,3$.

The mapper 402 groups the four pre-coded symbols in pairs and outputs two vectors each including two elements, $[r_1, r_2]^T$ and $[r_3, r_4]^T$ to the Alamouti coder 406 and the delay 404, respectively.

The delay 404 delays the second vector $[r_3, r_4]^T$ for one time interval. Thus, the first vector $[r_1, r_2]^T$ is provided to the Alamouti coder 406 in a first time interval and the second vector $[r_3, r_4]^T$ is provided to the Alamouti coder 408 in a second time interval. The Alamouti coder refers to a coder that operates in the Alamouti STBC scheme.

The Alamouti coder 406 encodes $[r_1, r_2]^T$ so that it is transmitted through the first and second Tx antennas 410 and 412 for first and second time intervals. The Alamouti coder 408 encodes $[r_3, r_4]^T$ so that it is transmitted through the third and fourth Tx antennas 414 and 416 for third and fourth time intervals. The following is a coding matrix used to transmit the four symbols from the mapper 402 through the multiple antennas as shown in Equation (6):

$$S = \begin{bmatrix} r_1 & r_2 & 0 & 0 \\ -r_2^* & r_1^* & 0 & 0 \\ 0 & 0 & r_3 & r_4 \\ 0 & 0 & -r_4^* & r_3^* \end{bmatrix}$$

$$\ldots\ldots(6)$$

Unlike the coding matrix illustrated in Equation (4), the above coding matrix is designed to be an Alamouti STBC rather than a diagonal matrix. The use of the Alamouti STBC scheme increases coding gain. An $i^{th}$ row represents an $i^{th}$ time interval and a $j^{th}$ column represents a $j^{th}$ Tx antenna.

Thus, $r_1$ and $r_2$ are transmitted through the first and second Tx antennas 410 and 412, respectively, for a first time interval and $-r_2^*$ and $r_1^*$ are transmitted through the first and second Tx antennas 410 and 412, respectively, for a second time interval. $r_3$ and $r_4$ are transmitted through the third and fourth Tx antennas 414 and 416, respectively, for a third time interval and $-r_4^*$ and $r_3^*$ are transmitted through the third and fourth Tx antennas 414 and 416, respectively, for a fourth time interval.

This Alamouti FDFR STBC, however, has the distinctive shortcoming of increased coding complexity because the transmitter must perform pre-coding computations between all elements of the pre-coding matrix and an input vector. For example, since 0 is not included in the elements of the pre-coding matrix, computation must be carried out on 16 elements for four Tx antennas. Also, the receiver must perform ML decoding with a large volume of computation in order to decode the signal, d transmitted by the transmitter. To reduce such high complexity, Chan-Byoung Chae, et. al. of Samsung Electronics proposed the following matrix shown in Equation (7):

$$\Theta = \begin{bmatrix} 1 & \alpha_0^1 & \cdots & \alpha_0^{N_t/2-1} & 0 & \cdots & 0 \\ 0 & 0 & \cdots & 0 & 1 & \cdots & \alpha_1^{N_t/2-1} \\ \vdots & \vdots & \ddots & \cdots & \cdots & \ddots & \vdots \\ 1 & \alpha_{N_t-2}^1 & \cdots & \alpha_{N_t-2}^{N_t/2-1} & 0 & \cdots & 0 \\ 0 & 0 & \cdots & 0 & 1 & \cdots & \alpha_{N_t-1}^{N_t/2-1} \end{bmatrix}$$

$$\cdots\cdots (7)$$

where $\Theta$ is a pre-coding matrix for an arbitrary even number of Tx antennas. The subsequent operations are performed in the same manner as performed in Cheun ; however, compared to the FDFR Alamouti STBC scheme, Chae's scheme remarkably reduces ML decoding complexity at the receiver through a series of puncturing and shifting operations.

All of the above approaches suffer from high decoding complexity relative to the Alamouti scheme that allows linear decoding of transmitted symbols. Thus, continual efforts have been made to further decrease the decoding complexity. In this context, Professor Sundar Rajan's group from India (hereinafter referred to as Sundar Rajan group) presented an FDFR STBC that allows linear decoding.

In this STBC, every value $r_i$ of the coding matrix illustrated in Equation (6) is multiplied by $e^{j\theta}$ (i.e., rotation on a complex plane), and the real and imaginary parts of the resulting new value $x_i + jy_i$ are reconstructed. The resulting coding matrix is expressed as the following Equation (8):

$$S = \begin{bmatrix} x_1 + jy_3 & x_2 + jy_4 & 0 & 0 \\ -(x_2 + jy_4)^* & (x_1 + jy_3)^* & 0 & 0 \\ 0 & 0 & x_3 + jy_1 & x_4 + jy_2 \\ 0 & 0 & -(x_4 + jy_2)^* & (x_3 + jy_1)^* \end{bmatrix}$$

$$\cdots\cdots (8)$$

The use of Equation (8) allows linear decoding at the receiver, thus decreasing decoding complexity. The Sundar Rajan group uses a fixed phase rotation angle $\theta$. Here, $\theta = (1/2)\text{atan2}$.

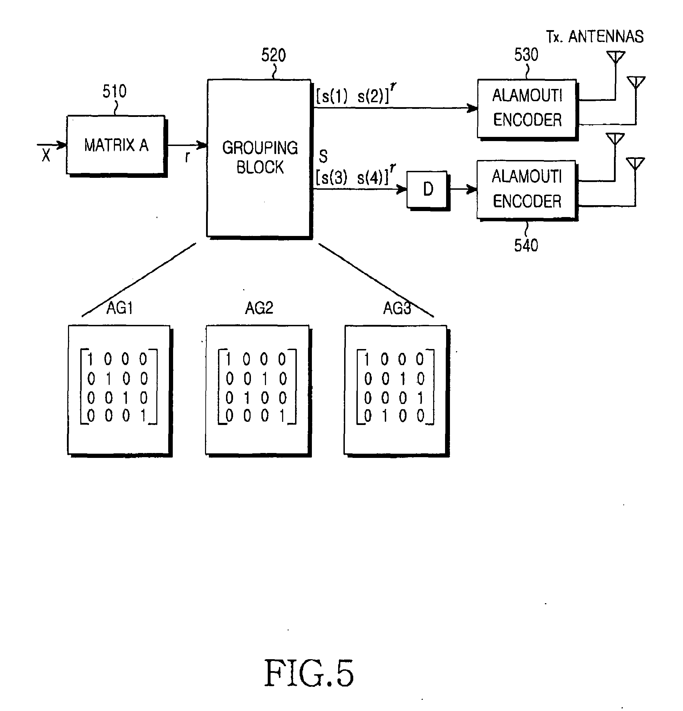

A mobile communication system using the Sundar Rajan group STBC scheme adopts a transmitter having the configuration illustrated in FIG. 5. Information symbols $s_1$, $s_2$, $s_3$, $s_4$ are multiplied by $\exp(j\theta)$ in a pre-coder and then reconstructed in a mapper.

Specifically, the mapper reconstructs pre-coded symbols $c_i = x_i + jy_i$ to $c_1' = x_1 + jy_3$, $c_2' = x_2 + jy_4$, $c_3' = x_3 + jy_1$ and $c_4' = x_4 + jy_2$, and groups the reconstructed symbols in pairs to vectors $[c_2' c_1']$ and $[c_4' c_3']$. The vectors $[c_2' c_1']$ and $[c_4' c_3']$ are transmitted through their corresponding Alamouti coders.

However, the above-described coding methods commonly increase receiver complexity in implementing an FDFR system with four Tx antennas.

Accordingly, a system capable of improving performance without increasing receiver complexity is required. Thus, an IEEE 802.16 system uses an STC described as an identity matrix in such a pre-coder as illustrated in FIG. 4. In this case, although a diversity gain is no more than 2 in a system with four Tx antennas, an existing Alamouti receiver can still be used.

Yet, this system needs further improvement in performance for more accurate communications. Hence, a need exists for an apparatus and method for improving the bit error rate (BER)/frame error rate (FER) performance of a communication system using an STC represented as an identity matrix for four Tx antennas.

## SUMMARY OF THE INVENTION

An object of the present invention is to provide a transmitting apparatus and method using an STBC scheme for improving BER/FER performance in a mobile communication system with four Tx antennas.

Another object of the present invention is to provide a transmitting apparatus and method using an STBC scheme for improving BER/FER performance by selecting an antenna grouping pattern based on feedback channel information from a receiver, multiplying a symbol vector by the antenna grouping pattern, and transmitting the resulting grouping symbol vector through four Tx antennas in a mobile communication system with four Tx antennas.

A further object of the present invention is to provide an STBC coding apparatus and method for improving BER/FER performance by multiplying a symbol vector by a predetermined permutation antenna grouping pattern and transmitting the resulting grouping symbol vector through four Tx antennas in a mobile communication system with a plurality of Tx antennas.

The above objects are achieved by providing an apparatus and method for transmitting and receiving a signal using an STBC scheme.

According to one aspect of the present invention, in a transmitter with four transmit antennas in a communication system, an encoder generates a code symbol vector by encoding an input symbol sequence in a predetermined coding method. A grouping block selects an antenna grouping pattern based on CQI received from a receiver and generates a grouping symbol vector by multiplying the code symbol vector by the antenna grouping pattern. An Alamouti encoder encodes the grouping symbol vector in an Alamouti scheme and transmits Alamouti-coded symbols through the four transmit antennas.

According to another aspect of the present invention, in a transmission method for four transmit antennas in a communication system, a code symbol vector is generated by encoding an input symbol sequence in a predetermined coding method. An antenna grouping pattern is selected based on feedback channel quality information (CQI) received from a receiver and a grouping symbol vector is generated by multiplying the code symbol vector by the antenna grouping pattern. The grouping symbol vector is encoded in an Alamouti scheme and transmitted through the four transmit antennas.

## BRIEF DESCRIPTION OF THE DRAWINGS

The above and other objects, features and advantages of the present invention will become more apparent from the following detailed description when taken in conjunction with the accompanying drawings in which:

FIG 1 is a block diagram of a transmitter in a mobile communication system using a conventional STBC scheme;
FIG 2 is a block diagram of a receiver in the mobile communication system using the conventional STBC scheme;
FIG 3 is a block diagram of a transmitter in a mobile communication system using a conventional Giannakis STBC scheme;
FIG 4 is a block diagram of a transmitter in a mobile communication system using a conventional Alamouti FDFR STBC scheme with four Tx antennas;
FIG 5 is a block diagram of a transmitter in a mobile communication system using an STBC scheme according to an embodiment of the present invention;
FIG 6 is a block diagram of a transmitter in a mobile communication system using an STFBC scheme according to another embodiment of the present invention;
FIG 7 is a block diagram of a receiver in the mobile communication system using the STBC scheme according to the present invention;
FIG. 8 is a flowchart illustrating a transmission operation in the mobile communication system using the STBC scheme according to the present invention;
FIG 9 is a flowchart illustrating a reception operation of the receiver in the mobile communication system using the STBC scheme according to the present invention;
FIG 10 is a graph illustrating the uncoded BER performance of the mobile communication system using the STBC scheme according to the present invention; and
FIG. 11 is a graph illustrating the coded BER/FER performance of the mobile communication system using the STBC scheme according to the present invention.

## DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

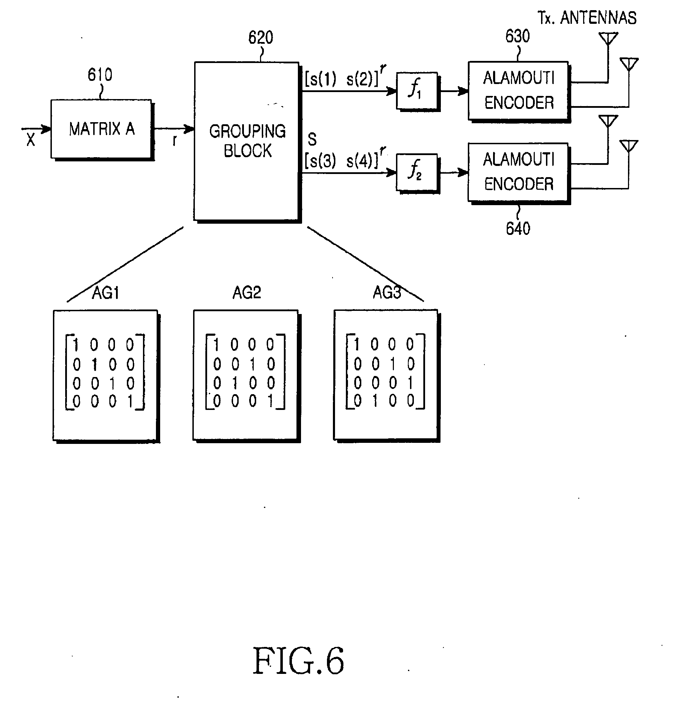

The present invention provides a technique of improving performance by grouping Tx antennas using an identity matrix intended for reducing receiver complexity or other matrices derived from the identity matrix with respect to an STC described as the following matrix A in a communication system, and illustrated in FIGs. 5 and 6 in a transmitter of Equation (9):

$$A = \begin{bmatrix} s_1 & -s_2^* & 0 & 0 \\ s_2 & s_1^* & 0 & 0 \\ 0 & 0 & s_3 & -s_4^* \\ 0 & 0 & s_4 & s_3^* \end{bmatrix}$$

$$\dots\dots (9)$$

where the columns of the matrix A represent time and the rows represent Tx antennas.

FIG. 5 is a block diagram of a transmitter in a mobile communication system using an STBC scheme according to an embodiment of the present invention. The transmitter is shown as having four Tx antennas by way of example.

Referring to FIG. 5, a matrix A encoder 510 resides before a grouping block 520, for generating an STC represented as the matrix A. The grouping block 520 receives the STC symbol sequence from the matrix A encoder 510 and CQI or a grouping index fed back from a receiver. The grouping index indicates a grouping pattern by which particular antennas are grouped to be mapped to an Alamouti encoder. The receiver selects one of an identity matrix $AG_1$ and other matrices $AG_2$ and $AG_3$ according to Equation (11) set forth below. These matrices $AG_1$, $AG_2$ and $AG_3$ represent antenna grouping patterns as illustrated in FIGs. 5 and 6. In the case where the transmitter receives the feedback CQI, it selects one of the matrices $AG_1$, $AG_2$ and $AG_3$ by computing Equation (11).

The grouping block 520 selects one of the matrices $AG_1$, $AG_2$ and $AG_3$ based on the CQI or the grouping index, multiplies the matrix A by the selected matrix and maps the symbols of the resulting matrix to four Tx antennas. For instance, if a feedback grouping index indicates grouping of the first and second Tx antennas to be mapped to a first Alamouti encoder and grouping of the third and fourth Tx antennas to be mapped to a second Alamouti encoder, some input symbols are transmitted at times t1 and t2 through the first and second Tx antennas and the other input symbols are transmitted at times t3 and t4 through the third and fourth Tx antennas, where the columns represent time and the rows of the matrix A represent the Tx antennas.

In FIG 5, upon receipt of feedback CQI or a feedback grouping index from the receiver, the grouping block 520 multiplies the matrix A by one of the antenna grouping matrices $AG_1$, $AG_2$ and $AG_3$ and Alamouti encoders 530 and 540 encode symbols received from the grouping block 520. The Alamouti code symbols are expressed as one of matrices A1, A2 and A3, which will be described later.

FIG. 6 is a block diagram of a transmitter in a mobile communication system using an STFBC scheme according to another embodiment of the present invention. A matrix A encoder 610 resides before a grouping block 620. The rows of the matrix A expressed as Equation (9) represent Tx antennas and the columns represent time and frequencies. The data of the first two columns is transmitted at frequency f1, and the data of the last two columns is transmitted at frequency f2. The data of the first column in each pair is transmitted at time t 1 and the data of the second column at time t2. This matrix can be used for an Orthogonal Frequency Division Multiplexing (OFDM) system.

The grouping block 620 maps input information symbols to four Tx antennas based on CQI or a grouping index received from the receiver. For instance, if the feedback grouping index indicates grouping of the first and second Tx antennas to be mapped to a first Alamouti encoder and grouping of the third and fourth Tx antennas to be mapped to a second Alamouti encoder, the input symbols are transmitted according to Equation (9). That is, the first two columns are mapped to f1 and transmitted at times t1 and t2 through the first and second Tx antennas, whereas the last two columns are mapped to frequency f2 and transmitted at times t1 and t2 through the third and fourth Tx antennas.

In FIG. 6, antenna grouping is applied to an STFBC and the subsequent processes are performed in the same manner as in the transmitter illustrated in FIG. 5.

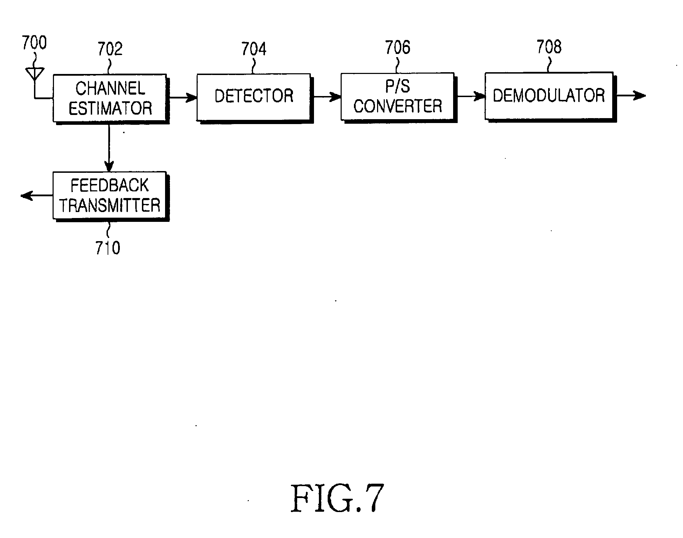

FIG 7 is a block diagram of a receiver in the mobile communication system using the STBC scheme according to the present invention. For simplicity, the receiver is assumed to have a single Rx antenna.

Referring to FIG. 7, a channel estimator 702 in the receiver performs channel estimation on a signal received through an Rx antenna 700 and outputs the resulting channel coefficients as CQI. The received signal is then decoded after processing in a detector 704, a parallel-to-serial (P/S) converter 706 and a demodulator 708. Meanwhile, a feedback transmitter 710 transmits the channel coefficients as CQI, or a grouping index indicating an antenna grouping pattern to the grouping block of the transmitter.

The receiver transmits the CQI resulting from channel estimation or a grouping index indicating an antenna grouping pattern to the transmitter, as described above.

(1) Feedback of CQI

Upon receipt of CQI (i.e. channel coefficients or channel values) from the receiver, the grouping block of the transmitter computes Equation (10:

$$arg\ min\left|\rho_1 - \rho_2\right|$$

$$\ldots\ldots(10)$$

where $\rho_1 = |h_i|^2 + |h_j|^2$ and $\rho_2 = |h_m|^2 + |h_n|^2$ (i, j, m, n range from 1 to 4). The grouping block receives the feedback CQI of the channels $h_1$, $h_2$, $h_3$ and $h_4$ between the Tx antennas and the Rx antenna and detects (i, j) and (m, n) pairs that satisfy Equation (10), thereby selecting an antenna grouping pattern. The grouping block multiplies the matrix A described as Equation (9) by the selected one of antenna grouping patterns $AG_1$, $AG_2$ and $AG_3$. The resulting matrix is one of the following matrices $A_1$, $A_2$ and $A_3$ of Equation (11):

$$A_1 = \begin{bmatrix} s_1 & -s_2^* & 0 & 0 \\ s_2 & s_1^* & 0 & 0 \\ 0 & 0 & s_3 & -s_4^* \\ 0 & 0 & s_4 & s_3^* \end{bmatrix}$$

$$A_2 = \begin{bmatrix} s_1 & -s_2^* & 0 & 0 \\ 0 & 0 & s_3 & -s_4^* \\ s_2 & s_1^* & 0 & 0 \\ 0 & 0 & s_4 & s_3^* \end{bmatrix}$$

$$A_3 = \begin{bmatrix} s_1 & -s_2^* & 0 & 0 \\ 0 & 0 & s_3 & -s_4^* \\ 0 & 0 & s_4 & s_3^* \\ s_2 & s_1^* & 0 & 0 \end{bmatrix}$$

$$\ldots\ldots(11)$$

For two or more Rx antennas, the following operation is first performed. Given two Rx antennas, eight channels are defined between the four Tx antennas and the two Rx antennas. These channels are generalized to $h_i = (|h_{1i}|^2 + |h_{2i}|^2)/2$ where $h_{1i}$ and $h_{2i}$ denote channel values between Tx antenna i and Rx antenna 1 and between Tx antenna i and Rx antenna 2, respectively. Thus, $h_{11}$ and $h_{21}$ denote channel values between Tx antenna 1 and Rx antenna 1 and between Tx antenna 1 and Rx antenna 2, respectively, and $h_1=(|h_{11}|^2 + |h_{21}|^2)/2$. In the same manner, $h_1$ to $h_4$ are computed and an antenna grouping pattern is obtained by computing Equation (10) using $h_1$ to $h_4$.

(2) Feedback of Grouping Index

From the perspective of system implementation, many limitations are imposed on transmission of the CQI of all channels received at the receiver to the transmitter. Hence, the receiver calculates a grouping index by Equation (10) and feeds back the grouping index to the transmitter so that the grouping block of the transmitter groups Tx antennas based on an antenna grouping pattern indicated by the grouping index. The grouping index occupies two bits to represent the antenna grouping patterns $AG_1$, $AG_2$ and $AG_3$ illustrated in FIGs. 5 and 6.

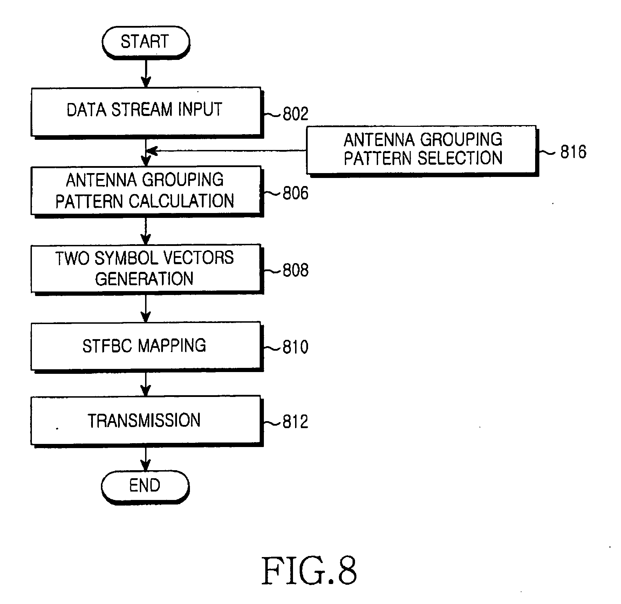

FIG 8 is a flowchart illustrating a transmission operation in the mobile communication system using the STBC scheme according to the present invention. Upon receipt of a transmission data stream (i.e. the matrix A) in step 802, the transmitter calculates an antenna grouping pattern by Equation (10) using CQI received from the receiver in step 806 or selects the antenna grouping pattern according to a grouping index received from the receiver in step 816. That is, the receiver feeds back the CQI or the grouping index to the transmitter in accordance with the present invention. In step 808, the transmitter multiplies the antenna grouping pattern by the data stream (the matrix A) and generates two symbol vectors each having two symbols. The transmitter then maps the two vectors to the Tx antennas in the space-time-frequency plane through Alamouti coding in step 810 and transmits the mapped signals through the corresponding Tx antennas in step 812.

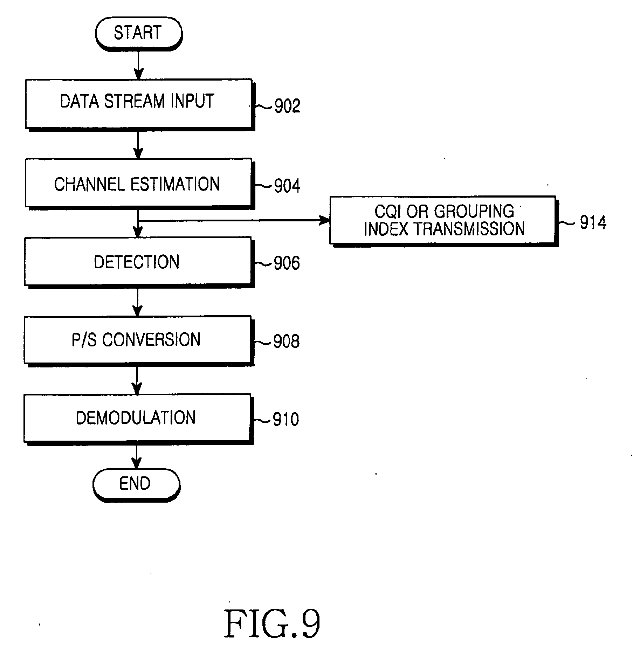

FIG. 9 is a flowchart illustrating a reception operation of the receiver in the mobile communication system using the STBC scheme according to the present invention. Upon receipt of a transmission data stream in step 902, the receiver performs a channel estimation on the received signal in step 904 and feeds back the resulting CQI to the transmitter in step 914. In this case, the transmitter calculates an antenna grouping pattern based on the CQI by Equation (9). Alternatively, when agreed between the transmitter and the receiver, the receiver calculates an antenna grouping pattern by Equation (10) without feeding back the CQI and transmits a grouping index indicating the antenna grouping pattern to the transmitter. Particularly, in the case where the transmitter itself calculates the antenna grouping pattern, the transmitter notifies the receiver of the calculated antenna grouping pattern to increase the accuracy of communications. That is, when the antenna grouping pattern calculated in the transmitter is different from that obtained in the receiver, the transmitter transmits a grouping index indicating the antenna grouping pattern to the receiver on a common channel, thereby improving data transmission accuracy. The receiver then detects the received signal based on the channel coefficients resulting from the channel estimation in step 906, converts the detected signal to a serial signal in step 908, and demodulates the serial signal in step 910.

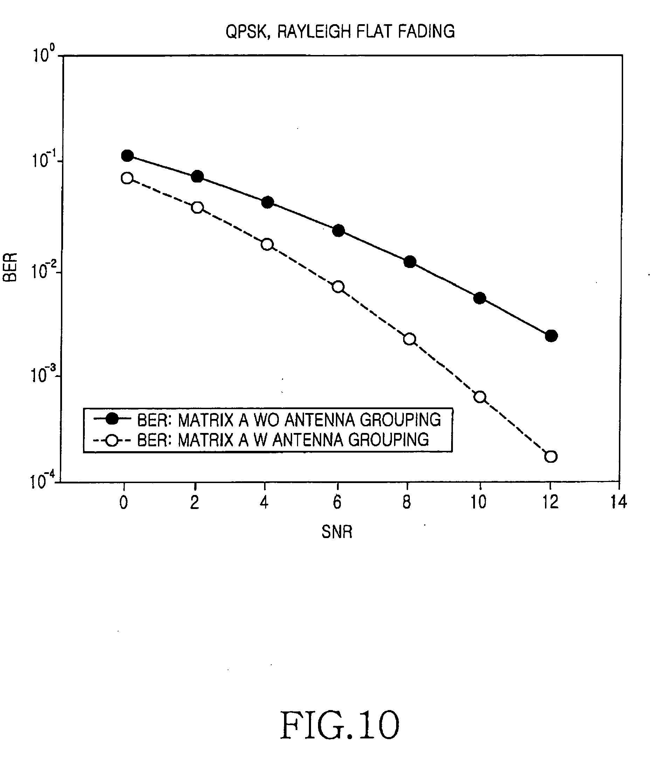

FIG. 10 is a graph illustrating the uncoded bit error rate (BER) performance of the mobile communication system using the STBC scheme according to the present invention. As shown in FIG 10, the present invention provides a 3dB or above gain at a BER of $10^{-3}$, compared to the conventional method using only the matrix A without antenna grouping. In FIG. 10, w denotes with and wo denotes without. The performance curves shown in FIG. 10 were simulated under a Rayleigh flat fading channel-QPSK environment.

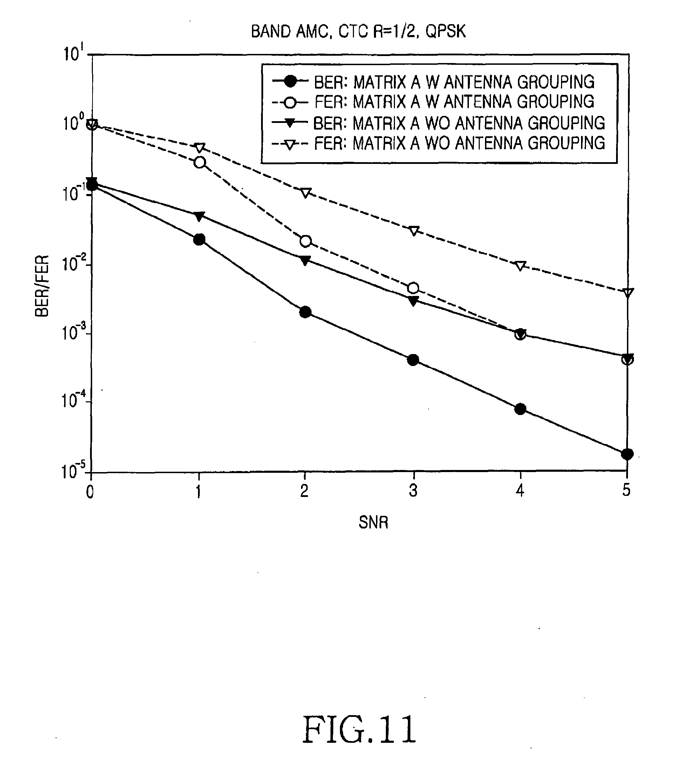

FIG. 11 is a graph illustrating the coded bit error rate/frame error rate (BER/FER) performance of the mobile communication system using the STBC scheme according to the present invention. It is noted from FIG 11 that the present invention outperforms the conventional method using only the matrix A without antenna grouping. The performance curves shown in FIG. 11 were simulated in an IEEE 802.16 system with QPSK and rate 1/2 convolutional Turbo coding. Subchannel structures, band AMC and Full Usage of SubChannel (FUSC) are defined for the IEEE 802.16a system. In the simulation, the band AMC was used.

In application of the present invention to the IEEE 802.16 system being an OFDM system, the average channel values of subchannels each having N subcarriers are fed back to reduce the amount of feedback information. In this case, the transmitter calculates an antenna grouping pattern based on the average channel values and notifies the receiver of the calculated antenna grouping pattern, thereby communicating bi-directionally with accuracy.

Alternatively, the receiver feeds back a grouping index to the transmitter and the transmitter selects a STBC coder corresponding to the grouping index.

For example, as illustrated in Table 1 below, upon receipt of "0b110001" on a CQI Channel (CQICH) from the receiver, the transmitter transmits $A_1$ described in Equation (11). When "0b110010" is received on the CQICH from the receiver, the transmitter transmits $A_2$, whereas when "0b110011" is received on the CQICH from the receiver, the transmitter transmits $A_3$.

Table 1

| Value | Description |
|-------|-------------|
| 0b110000 | Closed-loop Adaptive Rate SM and adjacent subcarrier permutation |
| 0b110001 | Antenna Group A1 for rate 1 <br> For 3-antenna BS, See 8.4.8.3.4 <br> For 4-antenna BS, See 8.4.8.3.5 |
| 0b110010 | Antenna Group A2 for rate 1 |
| 0b110011 | Antenna Group A3 for rate 1 |
| 0b110100 | Antenna Group B1 for rate 2 <br> For 3-antenna BS, See 8.4.8.3.4 |
| 0b110101 | Antenna Group B2 for rate 2 |

Table continued

| Value | Description |
|---|---|
| 0b110110 | Antenna Group B3 for rate 2 |
| 0b110111 | Antenna Group B4 for rate 2 (only for 4-antenna BS) |
| 0b111000 | Antenna Group B5 for rate 2 (only for 4-antenna BS) |
| 0b111001 | Antenna Group B6 for rate 2 (only for 4-antenna BS) |
| 0b111010 | Antenna Group C1 for rate 3 (only for 4-antenna BS) See 8.4.8.3.5 |
| 0b111011 | Antenna Group C2 for rate 3 (only for 4-antenna BS) |
| 0b111100 | Antenna Group C3 for rate 3 (only for 4-antenna BS) |
| 0b111101 | Antenna Group C4 for rate 3 (only for 4-antenna BS) |
| 0b111110 | Closed-loop Precoding and adjacent subcarrier permutation |
| 0b110001 | Reserved |
| 0b111111 | Reserved |

As described above, the receiver feeds back CQI or a grouping index to the transmitter.

Without the feedback information from the receiver (i.e. a subscriber station), the subject matter of the present invention can also be achieved. In an open loop without feedback information from the receiver, the same performance improvement is achieved by using the following antenna grouping patterns in a predetermined order in the grouping block of the transmitter (i.e. a base station) so that grouping symbol vectors can be permuted as shown in Equation (12).

$$A = \begin{bmatrix} A_1 | A_2 | A_3 \end{bmatrix}$$

$$A_1 = \begin{bmatrix} s_1 & -s_2^* & 0 & 0 \\ s_2 & s_1^* & 0 & 0 \\ 0 & 0 & s_3 & -s_4^* \\ 0 & 0 & s_4 & s_3^* \end{bmatrix}$$

$$A_2 = \begin{bmatrix} s_1 & -s_2^* & 0 & 0 \\ 0 & 0 & s_3 & -s_4^* \\ s_2 & s_1^* & 0 & 0 \\ 0 & 0 & s_4 & s_3^* \end{bmatrix}$$

$$A_3 = \begin{bmatrix} s_1 & -s_2^* & 0 & 0 \\ 0 & 0 & s_3 & -s_4^* \\ 0 & 0 & s_4 & s_3^* \\ s_2 & s_1^* & 0 & 0 \end{bmatrix}$$

$$\dots\dots (12)$$

Permutation of the sequence of antenna grouping patterns in time leads to the increase of system performance without channel feedback. The antenna grouping patterns may be used in the sequential order of $A_1$, $A_2$ and $A_3$ or in any other order.

In the OFDMA communication system, the permutation order for subcarriers is determined by Equation (13):

$$A_k : k = mod\left(floor(Nc - 1)/2, 3\right) + 1$$

$$\ldots \ldots (13)$$

where Nc denotes the number of a logical data subcarrier, Nc={1, 2, 3, ..., total number of subcarriers}. The logical data subcarrier number corresponds to a subcarrier number in OFDM FFT. In Equation 13, $A_1$ applies to logical data subcarriers #1 and #2, $A_2$ applies to logical data subcarriers #3 and #4, and $A_3$ applies to logical data subcarriers #5 and #6. Antenna grouping patterns for the other subcarriers are decided also by Equation (13).

As described above, the present invention provides an STFBC coding apparatus for a transmitter with four Tx antennas. An input symbol sequence is transmitted through the four Tx antennas in a predetermined method based on feedback information received from a receiver or a selected matrix with regularities. Therefore, the performance of an STFBC is improved.

While the invention has been shown and described with reference to certain preferred embodiments thereof, it will be understood by those skilled in the art that various changes in form and details may be made therein without departing from the spirit and scope of the invention as defined by the appended claims.

**Claims**

1.   A transmitter with four transmit antennas in a communication system, comprising:

an encoder for generating a code symbol vector by encoding an input symbol sequence in a predetermined coding method;
a grouping block for selecting an antenna grouping pattern based on feedback channel quality information (CQI) received from a receiver and generating a grouping symbol vector by multiplying the code symbol vector by the antenna grouping pattern; and
an Alamouti-type encoder for encoding the grouping symbol vector in an Alamouti-type scheme and transmitting Alamouti-type coded symbols through the four transmit antennas.

2.   The transmitter of claim 1, wherein the transmitter is used for a space-time block coding (STBC) communication system with four transmit antennas.

3.   The transmitter of claim 1, wherein the transmitter is used for a space-time-frequency block coding (STFBC) communication system with four transmit antennas.

4.   The transmitter of claim 1, wherein the code symbol vector is expressed as the following matrix:

$$A = \begin{bmatrix} s_1 & -s_2^* & 0 & 0 \\ s_2 & s_1^* & 0 & 0 \\ 0 & 0 & s_3 & -s_4^* \\ 0 & 0 & s_4 & s_3^* \end{bmatrix}$$

where the columns of the matrix A represent time and the rows represent four transmit antennas.

5.   The transmitter of claim 1, wherein the four transmit antennas are in the transmitter and one receive antenna is in the receiver, and the grouping block selects the antenna grouping pattern based on the feedback CQI by

$$arg\ min\left|\rho_1 - \rho_2\right|$$

$$\rho_1 = \left| h_i \right|^2 + \left| h_j \right|^2, \quad \rho_2 = \left| h_m \right|^2 + \left| h_n \right|^2$$

where i, j, m and n range from 1 to 4 and h values are channel coefficients between the four transmit antennas and the receive antenna.

6. The transmitter of claim 1, wherein the four transmit antennas are in the transmitter and two receive antennas are in the receiver, and the grouping block selects the antenna grouping pattern based on the feedback CQI by

$$arg\ min \left| \rho_1 - \rho_2 \right|$$

$$\rho_1 = \left| h_i \right|^2 + \left| h_j \right|^2, \quad \rho_2 = \left| h_m \right|^2 + \left| h_n \right|^2$$

where i, j, m, n range from 1 to 4 and h values are channel coefficients between the four transmit antennas and the two receive antennas, and $h_i = (|h_{1i}|^2 + |h_{2i}|^2)/2$ where $h_{1i}$ and $h_{2i}$ denote channel values between an $i^{th}$ transmit antenna and a first receive antenna and between the $i^{th}$ transmit antenna and a second receive antenna, respectively.

7. The transmitter of claim 1, wherein the grouping block selects one of the following antenna grouping patterns:

$$AG_1 = \begin{bmatrix} 1 & 0 & 0 & 0 \\ 0 & 1 & 0 & 0 \\ 0 & 0 & 1 & 0 \\ 0 & 0 & 0 & 1 \end{bmatrix}$$

$$AG_2 = \begin{bmatrix} 1 & 0 & 0 & 0 \\ 0 & 0 & 1 & 0 \\ 0 & 1 & 0 & 0 \\ 0 & 0 & 0 & 1 \end{bmatrix}$$

$$AG_3 = \begin{bmatrix} 1 & 0 & 0 & 0 \\ 0 & 0 & 1 & 0 \\ 0 & 0 & 0 & 1 \\ 0 & 1 & 0 & 0 \end{bmatrix}$$

8. The transmitter of claim 1, wherein the grouping symbol vector is one of the following matrices:

$$A_1 = \begin{bmatrix} s_1 & -s_2^* & 0 & 0 \\ s_2 & s_1^* & 0 & 0 \\ 0 & 0 & s_3 & -s_4^* \\ 0 & 0 & s_4 & s_3^* \end{bmatrix}$$

$$A_2 = \begin{bmatrix} s_1 & -s_2^* & 0 & 0 \\ 0 & 0 & s_3 & -s_4^* \\ s_2 & s_1^* & 0 & 0 \\ 0 & 0 & s_4 & s_3^* \end{bmatrix}$$

$$A_3 = \begin{bmatrix} s_1 & -s_2^* & 0 & 0 \\ 0 & 0 & s_3 & -s_4^* \\ 0 & 0 & s_4 & s_3^* \\ s_2 & s_1^* & 0 & 0 \end{bmatrix}$$

where the columns of the matrices represent time and the rows represent four transmit antennas.

9. A transmitter with four transmit antennas in a communication system, comprising:

an encoder for generating a code symbol vector by encoding an input symbol sequence in a predetermined coding method;
a grouping block for selecting an antenna grouping pattern based on a feedback grouping index received from a receiver and generating a grouping symbol vector by multiplying the code symbol vector by the antenna grouping pattern; and
an Alamouti-type encoder for encoding the grouping symbol vector in an Alamouti-type scheme and transmitting Alamouti-type coded symbols through the four transmit antennas.

10. The transmitter of claim 9, wherein the transmitter is used for a space-time block coding (STBC) communication system with four transmit antennas.

11. The transmitter of claim 9, wherein the transmitter is used for a space-time-frequency block coding (STFBC) communication system with four transmit antennas.

12. The transmitter of claim 9, wherein the code symbol vector is expressed as the following matrix:

$$A = \begin{bmatrix} s_1 & -s_2^* & 0 & 0 \\ s_2 & s_1^* & 0 & 0 \\ 0 & 0 & s_3 & -s_4^* \\ 0 & 0 & s_4 & s_3^* \end{bmatrix}$$

where the columns of the matrix A represent time and the rows represent four transmit antennas.

13. The transmitter of claim 9, wherein the four transmit antennas are in the transmitter and one receive antenna is in the receiver, and the feedback grouping index from the receiver is selected based on feedback channel quality information (CQI) by

**14**

$$arg\ min|\rho_1 - \rho_2|$$

$$\rho_1 = |h_i|^2 + |h_j|^2, \quad \rho_2 = |h_m|^2 + |h_n|^2$$

where i, j, m and n range from 1 to 4 and h values are channel coefficients between the four transmit antennas and the receive antenna.

**14.** The transmitter of claim 9, wherein the four transmit antennas are in the transmitter and two receive antennas are in the receiver, and the feedback grouping index from the receiver is selected based on feedback channel quality information (CQI) by

$$arg\ min|\rho_1 - \rho_2|$$

$$\rho_1 = |h_i|^2 + |h_j|^2, \quad \rho_2 = |h_m|^2 + |h_n|^2$$

where i, j, m, n range from 1 to 4 and h values are channel coefficients between the four transmit antennas and the two receive antennas, and $h_1 = (|h_{1i}|^2 + |h_{2i}|^2)/2$ where $h_{1i}$ and $h_{2i}$ denote channel values between an $i^{th}$ transmit antenna and a first receive antenna and between the $i^{th}$ transmit antenna and a second receive antenna, respectively.

**15.** The transmitter of claim 9, wherein the grouping block selects one of the following antenna grouping patterns:

$$AG_1 = \begin{bmatrix} 1 & 0 & 0 & 0 \\ 0 & 1 & 0 & 0 \\ 0 & 0 & 1 & 0 \\ 0 & 0 & 0 & 1 \end{bmatrix}$$

$$AG_2 = \begin{bmatrix} 1 & 0 & 0 & 0 \\ 0 & 0 & 1 & 0 \\ 0 & 1 & 0 & 0 \\ 0 & 0 & 0 & 1 \end{bmatrix}$$

$$AG_3 = \begin{bmatrix} 1 & 0 & 0 & 0 \\ 0 & 0 & 1 & 0 \\ 0 & 0 & 0 & 1 \\ 0 & 1 & 0 & 0 \end{bmatrix}$$

**16.** The transmitter of claim 9, wherein the grouping symbol vector is one of the following matrices:

$$A_1 = \begin{bmatrix} s_1 & -s_2^* & 0 & 0 \\ s_2 & s_1^* & 0 & 0 \\ 0 & 0 & s_3 & -s_4^* \\ 0 & 0 & s_4 & s_3^* \end{bmatrix}$$

$$A_2 = \begin{bmatrix} s_1 & -s_2^* & 0 & 0 \\ 0 & 0 & s_3 & -s_4^* \\ s_2 & s_1^* & 0 & 0 \\ 0 & 0 & s_4 & s_3^* \end{bmatrix}$$

$$A_3 = \begin{bmatrix} s_1 & -s_2^* & 0 & 0 \\ 0 & 0 & s_3 & -s_4^* \\ 0 & 0 & s_4 & s_3^* \\ s_2 & s_1^* & 0 & 0 \end{bmatrix}$$

where the columns of the matrices represent time and the rows represent four transmit antennas.

17. A receiver for receiving a signal from a transmitter with four transmit antennas in a communication system, comprising:

   a channel estimator for generating channel quality information (CQI) using a signal received through a receive antenna; and
   a feedback transmitter for transmitting the CQI to a grouping block of the transmitter so that the grouping block can select an antenna grouping pattern based on the CQI.

18. A receiver for receiving a signal from a transmitter with four transmit antennas in a communication system, comprising:

   a channel estimator for generating channel quality information (CQI) using a signal received through a receive antenna; and
   a feedback transmitter for transmitting a grouping index indicating an antenna grouping pattern selected according the CQI to a grouping block of the transmitter.

19. The receiver of claim 18, wherein the four transmit antennas are in the transmitter and one receive antenna is in the receiver, and the feedback transmitter selects the antenna grouping pattern by

$$arg\ min|\rho_1 - \rho_2|$$

$$\rho_1 = |h_i|^2 + |h_j|^2, \quad \rho_2 = |h_m|^2 + |h_n|^2$$

where i, j, m and n range from 1 to 4 and h values are channel coefficients between the four transmit antennas and the receive antenna.

20. The receiver of claim 18, wherein the four transmit antennas are in the transmitter and one receive antenna is in the receiver, and the feedback transmitter selects one of the following antenna grouping patterns:

$$AG_1 = \begin{bmatrix} 1 & 0 & 0 & 0 \\ 0 & 1 & 0 & 0 \\ 0 & 0 & 1 & 0 \\ 0 & 0 & 0 & 1 \end{bmatrix}$$

$$AG_2 = \begin{bmatrix} 1 & 0 & 0 & 0 \\ 0 & 0 & 1 & 0 \\ 0 & 1 & 0 & 0 \\ 0 & 0 & 0 & 1 \end{bmatrix}$$

$$AG_3 = \begin{bmatrix} 1 & 0 & 0 & 0 \\ 0 & 0 & 1 & 0 \\ 0 & 0 & 0 & 1 \\ 0 & 1 & 0 & 0 \end{bmatrix}$$

21. A transmission method for four transmit antennas in a communication system, comprising the steps of:

generating a code symbol vector by encoding an input symbol sequence in a predetermined coding method;
selecting an antenna grouping pattern based on feedback channel quality information (CQI) received from a receiver and generating a grouping symbol vector by multiplying the code symbol vector by the antenna grouping pattern; and
encoding the grouping symbol vector in an Alamouti-type scheme and transmitting Alamouti-type coded symbols through the four transmit antennas.

22. The transmission method of claim 21, wherein the transmission method is used for a space-time block coding (STBC) communication system with four transmit antennas.

23. The transmission method of claim 21, wherein the transmission method is used for a space-time-frequency block coding (STFBC) communication system with four transmit antennas.

24. The transmission method of claim 21, wherein the four transmit antennas are in a transmitter and one receive antenna is in the receiver, and the antenna grouping pattern selection step comprises selecting the antenna grouping pattern based on the feedback CQI by

$$arg\ min|\rho_1 - \rho_2|$$

$$\rho_1 = |h_i|^2 + |h_j|^2, \quad \rho_2 = |h_m|^2 + |h_n|^2$$

where i, j, m and n range from 1 to 4 and h values are channel coefficients between the four transmit antennas and the receive antenna.

25. The transmission method of claim 21, wherein the four transmit antennas are in the transmitter and two receive antennas are in the receiver, and the antenna grouping pattern selection step comprises selecting the antenna grouping pattern based on the feedback CQI by

$$arg\ min|\rho_1 - \rho_2|$$

$$\rho_1 = \left|h_i\right|^2 + \left|h_j\right|^2, \quad \rho_2 = \left|h_m\right|^2 + \left|h_n\right|^2$$

where i, j, m and n range from 1 to 4 and h values are channel coefficients between the transmit antennas and the receive antennas, and $h_i = (|h_{1i}|^2 + |h_{2i}|^2)/2$ where $h_{1i}$ and $h_{2i}$ denote channel values between an $i^{th}$ transmit antenna and a first receive antenna and between the $i^{th}$ transmit antenna and a second receive antenna, respectively.

26. The transmission method of claim 21, wherein the antenna grouping pattern selection step comprises selecting one of the following antenna grouping patterns:

$$AG_1 = \begin{bmatrix} 1 & 0 & 0 & 0 \\ 0 & 1 & 0 & 0 \\ 0 & 0 & 1 & 0 \\ 0 & 0 & 0 & 1 \end{bmatrix}$$

$$AG_2 = \begin{bmatrix} 1 & 0 & 0 & 0 \\ 0 & 0 & 1 & 0 \\ 0 & 1 & 0 & 0 \\ 0 & 0 & 0 & 1 \end{bmatrix}$$

$$AG_3 = \begin{bmatrix} 1 & 0 & 0 & 0 \\ 0 & 0 & 1 & 0 \\ 0 & 0 & 0 & 1 \\ 0 & 1 & 0 & 0 \end{bmatrix}$$

27. The transmission method of claim 21, wherein the grouping symbol vector is one of the following matrices:

$$A_1 = \begin{bmatrix} s_1 & -s_2^* & 0 & 0 \\ s_2 & s_1^* & 0 & 0 \\ 0 & 0 & s_3 & -s_4^* \\ 0 & 0 & s_4 & s_3^* \end{bmatrix}$$

$$A_2 = \begin{bmatrix} s_1 & -s_2^* & 0 & 0 \\ 0 & 0 & s_3 & -s_4^* \\ s_2 & s_1^* & 0 & 0 \\ 0 & 0 & s_4 & s_3^* \end{bmatrix}$$

$$A_3 = \begin{bmatrix} s_1 & -s_2^* & 0 & 0 \\ 0 & 0 & s_3 & -s_4^* \\ 0 & 0 & s_4 & s_3^* \\ s_2 & s_1^* & 0 & 0 \end{bmatrix}$$

where the columns of the matrices represent time and the rows represent four transmit antennas.

28. A transmission method for four transmit antennas in a communication system, comprising the steps of:

generating a code symbol vector by encoding an input symbol sequence in a predetermined coding method; selecting an antenna grouping pattern based on a feedback grouping index received from a receiver and generating a grouping symbol vector by multiplying the code symbol vector by the antenna grouping pattern; and encoding the grouping symbol vector in an Alamouti-type scheme and transmitting Alamouti-type coded symbols through the four transmit antennas.

29. The transmission method of claim 28, wherein the transmission method is used for a space-time block coding (STBC) communication system with four transmit antennas.

30. The transmission method of claim 28, wherein the transmission method is used for a space-time-frequency block coding (STFBC) communication system with four transmit antennas.

31. The transmission method of claim 28, wherein the four transmit antennas are in a transmitter and one receive antenna is in the receiver, and the feedback grouping index from the receiver is selected based on feedback channel quality information (CQI) by

$$arg\ min\left|\rho_1 - \rho_2\right|$$

$$\rho_1 = \left|h_i\right|^2 + \left|h_j\right|^2, \quad \rho_2 = \left|h_m\right|^2 + \left|h_n\right|^2$$

where i, j, m and n range from 1 to 4 and h values are channel coefficients between the four transmit antennas and the receive antenna.

32. The transmission method of claim 28, wherein the four transmit antennas are in the transmitter and two receive antennas are in the receiver, and the feedback grouping index from the receiver is selected based on feedback channel quality information (CQI) by

$$arg\ min\left|\rho_1 - \rho_2\right|$$

$$\rho_1 = \left|h_i\right|^2 + \left|h_j\right|^2, \quad \rho_2 = \left|h_m\right|^2 + \left|h_n\right|^2$$

where i, j, m and n range from 1 to 4 and h values are channel coefficients between the four transmit antennas and the receive antennas, and $h_i = (\left|h_{1i}\right|^2 + \left|h_{2i}\right|^2)/2$ where $h_{1i}$ and $h_{2i}$ denote channel values between an $i^{th}$ transmit antenna and a first receive antenna and between the $i^{th}$ transmit antenna and a second receive antenna, respectively.

33. The transmission method of claim 28, wherein the antenna grouping pattern selection step comprises selecting one of the following antenna grouping patterns:

$$AG_1 = \begin{bmatrix} 1 & 0 & 0 & 0 \\ 0 & 1 & 0 & 0 \\ 0 & 0 & 1 & 0 \\ 0 & 0 & 0 & 1 \end{bmatrix}$$

$$AG_2 = \begin{bmatrix} 1 & 0 & 0 & 0 \\ 0 & 0 & 1 & 0 \\ 0 & 1 & 0 & 0 \\ 0 & 0 & 0 & 1 \end{bmatrix}$$

$$AG_3 = \begin{bmatrix} 1 & 0 & 0 & 0 \\ 0 & 0 & 1 & 0 \\ 0 & 0 & 0 & 1 \\ 0 & 1 & 0 & 0 \end{bmatrix}$$

**34.** The transmission method of claim 28, wherein the grouping symbol vector is one of the following matrices:

$$A_1 = \begin{bmatrix} s_1 & -s_2^* & 0 & 0 \\ s_2 & s_1^* & 0 & 0 \\ 0 & 0 & s_3 & -s_4^* \\ 0 & 0 & s_4 & s_3^* \end{bmatrix}$$

$$A_2 = \begin{bmatrix} s_1 & -s_2^* & 0 & 0 \\ 0 & 0 & s_3 & -s_4^* \\ s_2 & s_1^* & 0 & 0 \\ 0 & 0 & s_4 & s_3^* \end{bmatrix}$$

$$A_3 = \begin{bmatrix} s_1 & -s_2^* & 0 & 0 \\ 0 & 0 & s_3 & -s_4^* \\ 0 & 0 & s_4 & s_3^* \\ s_2 & s_1^* & 0 & 0 \end{bmatrix}$$

where the columns of the matrices represent time and the rows represent four transmit antennas.

**35.** A reception method for receiving a signal from a transmitter with four transmit antennas in a communication system, comprising the steps of:

generating channel quality information (CQI) using a signal received through a receive antenna; and transmitting the CQI to a grouping block of the transmitter so that the grouping block can select an antenna grouping pattern based on the CQI.

**36.** A reception method for receiving a signal from a transmitter with four transmit antennas in a communication system, comprising the steps of:

generating channel quality information (CQI) using a signal received through a receive antenna; selecting an antenna grouping pattern according to the CQI; and

transmitting a grouping index indicating the antenna grouping pattern to a grouping block of the transmitter.

**37.** The reception method of claim 36, wherein the four transmit antennas are in the transmitter and one receive antenna is in the receiver, and the antenna grouping pattern selection step comprises selecting the antenna grouping pattern by

$$arg\ min|\rho_1 - \rho_2|$$

$$\rho_1 = |h_i|^2 + |h_j|^2, \quad \rho_2 = |h_m|^2 + |h_n|^2$$

where i, j, m and n range from 1 to 4 and h values are channel coefficients between the transmit antennas and the receive antenna.

**38.** The reception method of claim 36, wherein the four transmit antennas are in the transmitter and one receive antenna is in the receiver, and the antenna grouping pattern selection step comprises selecting one of the following antenna grouping patterns:

$$AG_1 = \begin{bmatrix} 1 & 0 & 0 & 0 \\ 0 & 1 & 0 & 0 \\ 0 & 0 & 1 & 0 \\ 0 & 0 & 0 & 1 \end{bmatrix}$$

$$AG_2 = \begin{bmatrix} 1 & 0 & 0 & 0 \\ 0 & 0 & 1 & 0 \\ 0 & 1 & 0 & 0 \\ 0 & 0 & 0 & 1 \end{bmatrix}$$

$$AG_3 = \begin{bmatrix} 1 & 0 & 0 & 0 \\ 0 & 0 & 1 & 0 \\ 0 & 0 & 0 & 1 \\ 0 & 1 & 0 & 0 \end{bmatrix}$$

**39.** A transmission method for four transmit antennas in a communication system, comprising the steps of:

generating a code symbol vector by encoding an input symbol sequence in a predetermined coding method;
selecting an antenna grouping pattern based on feedback channel quality information (CQI) received from a receiver and generating a grouping symbol vector by applying the code symbol vector to the selected antenna grouping pattern; and
encoding the grouping symbol vector in an Alamouti-type scheme and transmitting Alamouti-type coded symbols through the four transmit antennas.

**40.** The transmission method of claim 39, wherein the selected antenna grouping pattern is one of the following matrices:

$$A_1 = \begin{bmatrix} s_1 & -s_2^* & 0 & 0 \\ s_2 & s_1^* & 0 & 0 \\ 0 & 0 & s_3 & -s_4^* \\ 0 & 0 & s_4 & s_3^* \end{bmatrix}$$

$$A_2 = \begin{bmatrix} s_1 & -s_2^* & 0 & 0 \\ 0 & 0 & s_3 & -s_4^* \\ s_2 & s_1^* & 0 & 0 \\ 0 & 0 & s_4 & s_3^* \end{bmatrix}$$

$$A_3 = \begin{bmatrix} s_1 & -s_2^* & 0 & 0 \\ 0 & 0 & s_3 & -s_4^* \\ 0 & 0 & s_4 & s_3^* \\ s_2 & s_1^* & 0 & 0 \end{bmatrix}$$

where the columns of the matrices represent time and the rows represent four transmit antennas.

**41.** A transmitter with four transmit antennas in a communication system, comprising:

an encoder for generating a code symbol vector by encoding an input symbol sequence in a predetermined coding method;
a grouping block for selecting an antenna grouping pattern based on feedback channel quality information (CQI) received from a receiver and generating a grouping symbol vector by applying the code symbol vector to the selected antenna grouping pattern; and
an Alamouti-type encoder for encoding the grouping symbol vector in an Alamouti-type scheme and transmitting Alamouti-type coded symbols through the four transmit antennas.

**42.** The transmitter of claim 41, wherein the selected antenna grouping pattern is one of the following matrices:

$$A_1 = \begin{bmatrix} s_1 & -s_2^* & 0 & 0 \\ s_2 & s_1^* & 0 & 0 \\ 0 & 0 & s_3 & -s_4^* \\ 0 & 0 & s_4 & s_3^* \end{bmatrix}$$

$$A_2 = \begin{bmatrix} s_1 & -s_2^* & 0 & 0 \\ 0 & 0 & s_3 & -s_4^* \\ s_2 & s_1^* & 0 & 0 \\ 0 & 0 & s_4 & s_3^* \end{bmatrix}$$

$$A_3 = \begin{bmatrix} s_1 & -s_2^* & 0 & 0 \\ 0 & 0 & s_3 & -s_4^* \\ 0 & 0 & s_4 & s_3^* \\ s_2 & s_1^* & 0 & 0 \end{bmatrix}$$

where the columns of the matrices represent time and the rows represent four transmit antennas.

# FIG.1
## (PRIOR ART)

# FIG.2
## (PRIOR ART)

# FIG.3
(PRIOR ART)

# FIG.4
(PRIOR ART)

510                          520                                      Tx. ANTENNAS
                                                              530

X ──→ MATRIX A ──→ $r$ ──→  GROUPING      $[s(1)\ \ s(2)]^r$ ──────→ ALAMOUTI
                            BLOCK                                     ENCODER

                                          S
                                          $[s(3)\ \ s(4)]^r$ ──→ D ──→ ALAMOUTI
                                                                       ENCODER

                                                                         540

        AG1                        AG2                        AG3

$\begin{bmatrix} 1 & 0 & 0 & 0 \\ 0 & 1 & 0 & 0 \\ 0 & 0 & 1 & 0 \\ 0 & 0 & 0 & 1 \end{bmatrix}$    $\begin{bmatrix} 1 & 0 & 0 & 0 \\ 0 & 0 & 1 & 0 \\ 0 & 1 & 0 & 0 \\ 0 & 0 & 0 & 1 \end{bmatrix}$    $\begin{bmatrix} 1 & 0 & 0 & 0 \\ 0 & 0 & 1 & 0 \\ 0 & 0 & 0 & 1 \\ 0 & 1 & 0 & 0 \end{bmatrix}$

# FIG.5

FIG.6

27

700　　　　702　　　　　　704　　　　　　706　　　　　　708

CHANNEL ESTIMATOR → DETECTOR → P/S CONVERTER → DEMODULATOR →

FEEDBACK TRANSMITTER

710

# FIG.7

START

DATA STREAM INPUT ~802

ANTENNA GROUPING
PATTERN SELECTION ~816

ANTENNA GROUPING
PATTERN CALCULATION ~806

TWO SYMBOL VECTORS
GENERATION ~808

STFBC MAPPING ~810

TRANSMISSION ~812

END

FIG.8

```
        ┌─────────┐
        │  START  │
        └─────────┘
             │
             ▼
┌──────────────────────────┐
│    DATA STREAM INPUT      │──902
└──────────────────────────┘
             │
             ▼
┌──────────────────────────┐
│    CHANNEL ESTIMATION     │──904        ┌──────────────────────────┐
└──────────────────────────┘────────────▶│   CQI OR GROUPING         │──914
             │                            │   INDEX TRANSMISSION      │
             ▼                            └──────────────────────────┘
┌──────────────────────────┐
│       DETECTION           │──906
└──────────────────────────┘
             │
             ▼
┌──────────────────────────┐
│     P/S CONVERSION        │──908
└──────────────────────────┘
             │
             ▼
┌──────────────────────────┐
│     DEMODULATION          │──910
└──────────────────────────┘
             │
             ▼
        ┌─────────┐
        │   END   │
        └─────────┘
```

FIG.9

QPSK, RAYLEIGH FLAT FADING

Legend:
- BER: MATRIX A WO ANTENNA GROUPING
- BER: MATRIX A W ANTENNA GROUPING

FIG.10

BAND AMC, CTC R=1/2, QPSK

- ●— BER: MATRIX A W ANTENNA GROUPING
- -○— FER: MATRIX A W ANTENNA GROUPING
- ▼— BER: MATRIX A WO ANTENNA GROUPING
- -▽-- FER: MATRIX A WO ANTENNA GROUPING

FIG.11